# EUROPÄISCHE PATENTSCHRIFT

(11) **EP 0 765 706 B1**
(45) Veröffentlichungstag und Bekanntmachung des Hinweises auf die Patenterteilung: **28.07.1999**
(21) Anmeldenummer: 96111140.8
(22) Anmeldetag: 11.07.1996
(51) Int. Cl.: B23B 31/00

(54) **Handwerkzeugmaschine**
Portable machine tool
Machine-outil portable

(30) Priorität: 28.09.1995 DE 19536031
(43) Veröffentlichungstag der Anmeldung: 02.04.1997
(73) Patentinhaber: FESTO Tooltechnic GmbH & Co., 73728 Esslingen (DE)
(72) Erfinder: Schirrmacher, Roland, 82266 Inning a.A. (DE)
(74) Vertreter: Reimold, Otto, Dipl.-Phys.Dr.

(56) Entgegenhaltungen:
- GB-A- 778 092
- US-A- 2 071 954
- US-A- 2 153 847
- US-A- 2 460 302
- US-A- 2 575 903
- US-A- 2 576 063

## Beschreibung

Die Erfindung betrifft eine Handwerkzeugmaschine mit einer von außen her zugänglichen Spannmutter zum Verbinden des Schaftes eines Werkstück-Bearbeitungswerkzeugs mit dem werkzeugseitigen Ende einer vom Maschinenmotor getriebenen Ausgangswelle, wobei die Spannmutter auf einem drehfest mit der Ausgangsweile verbundenen Gewinde zwischen einer den Werkzeugschaft festspannenden Spannstellung und einer den Werkzeugschaft loslassenden Lösestellung hin und her schraubbar ist, wobei die Spannmutter eine Angriffseinrichtung zum drehfesten Ansetzen eines Spannwerkzeugs aufweist und wobei an der Maschine eine von außen her bedienbare Eingriffseinrichtung mit einer Handhabe und einem Eingriffsteil angeordnet ist, die zwischen einer wirksamen Stellung, in der das Eingriffsteil mit einem drehfest mit der Ausgangswelle verbundenen Gegenstück drehfest in Eingriff steht, und einer unwirksamen Stellung, in der das Eingriffsteil das Gegenstück freigibt, verstellbar ist.

Bei üblichen Handwerkzeugmaschinen dieser Art wird bei einem Werkzeugwechsel die Ausgangswelle mittels der in ihre wirksame Stellung überführten Eingriffseinrichtung blockiert, wonach man die Spannmutter lösen und das bisherige Werkzeug entnehmen und gegebenenfalls durch ein anderes Werkzeug ersetzen kann, wobei man anschließend die Spannmutter bei weiterhin blockierter Ausgangswelle wieder festzieht. Dabei erfolgt das Lösen und Festspannen der Spannmutter mit Hilfe eines Schraubenschlüssels als Spannwerkzeug, der zum Lösen bzw. Festspannen unter Mitnahme der Spannmutter in die eine oder andere Richtung verschwenkt wird.

Dieses Vorgehen ist insofern umständlich, als nicht immer ein Spannwerkzeug zum Betätigen der Spannmutter zur Hand ist, so daß es erst geholt und/oder gesucht werden muß.

Der vorliegenden Erfindung liegt deshalb die Aufgabe zugrunde, eine Handwerkzeugmaschine der eingangs genannten Art zu schaffen, bei der das Einsetzen und Wegnehmen eines Werkzeugs vereinfacht ist.

Diese Aufgabe wird erfindungsgemäß dadurch gelöst, daß das Spannwerkzeug im Bereich der Spannmutter von außen her zugänglich an der Maschine befestigt und derart gelagert oder ausgebildet ist, daß es zwischen einer von der Spannmutter entfernten Freigabestellung und einer an die Spannmutter angesetzten und diese unverdrehbar haltenden Festhatlestellung bewegbar ist, und daß die Eingriffseinrichtung mindestens in ihrer wirksamen Stellung verdrehbar an der Maschine gelagert ist, so daß bei in der Festhaltestellung befindlichem Spannwerkzeug die Ausgangswelle und somit das Gewinde, auf das die Spannmutter aufgeschraubt ist, verdreht werden kann.

Auf diese Weise bildet das Spannwerkzeug einen Maschinenbestandteil, so daß es stets zur Verfügung steht. Dabei dient das Spannwerkzeug jetzt nicht mehr zum Verdrehen der Spannmutter, sondern zu deren Festhalten. Verdreht man demgegenüber die in ihre wirksame Stellung überführte Eingriffseinrichtung, schraubt sich die Spannmutter trotz ihres Festhaltens durch das Spannwerkzeug dem Gewinde entlang, so daß der Werkzeugschaft je nach Drehrichtung gelöst oder festgespannt wird.

Zweckmäßige Ausgestaltungen der Erfindung sind in den Unteransprüchen angegeben.

Ein Ausführungsbeispiel der Erfindung wird nun anhand der Zeichnung erläutert. Es zeigen:
- Fig. 1: eine Handwerkzeugmaschine in Gestalt einer Oberfräse in stark schematisierter Seitenansicht, teilweise geschnitten, wobei nur die im vorliegenden Zusammenhang interessierenden Maschinenteile mit ausgezogenen Linien dargestellt sind, während die Oberfräse ansonsten nur strichpunktiert angedeutet ist,
- Fig. 2: die Oberfräse nach Fig. 1 in gleicher Darstellungweise, wobei das Spannwerkzeug aus seiner in Fig. 1 gezeigten Freigabestellung in die Festhaltestellung und die Eingriffseinrichtung aus ihrer aus Fig. 1 hervorgehenden unwirksamen Stellung in ihre wirksame Stellung überführt ist, und
- Fig. 3: das an der Maschine befestigte Spannwerkzeug zusammen mit der Spannmutter in Draufsicht gemäß Pfeil III in vergrößerter Darstellung.

Bei der in der Zeichnung angedeuteten Handwerkzeugmaschine 1 handelt es sich um eine Oberfräse, die in üblicher Weise ein Maschinengehäuse 2 aufweist, das durch von einem ringartigen Maschinentisch 3 hochstehende Säulen 4 in der Höhe gehalten wird. Vom Maschinengehäuse 2 ragt ein eingespanntes Werkstück-Bearbeitungswerkzeug, im Falle einer Oberfräse also ein Fräser, nach unten, das abgeschnitten dargestellt ist, so daß nur sein eingespannter Werkzeugschaft 5 ersichtlich ist. Die Oberfräse 1 wird mit ihrem Maschinentisch 3 auf das zu bearbeitende Werkstück gestellt, wobei der am Werkzeugschaft 5 sitzende Fräskopf durch den Maschinentisch 3 zum Werkstück hin vorsteht. Hierzu wird das Maschinengehäuse 2 an den Säulen 4 auf die für den Anwendungsfall zutreffende Höhe eingestellt. Beim Betrieb führt das Bearbeitungswerkzeug um die Längsachse des Werkzeugschaftes 5 eine Rotationsbewegung aus. Der Antrieb zu dieser Rotationsbewegung erfolgt durch einen im Maschinengehäuse 2 enthaltenen Maschinenmotor 6, der beim Ausführungsbeispiel ein Elektromotor ist.

Dies soll für das allgemeine Verständnis der angedeuteten Oberfräse genügen. Dabei wird ausdrücklich darauf hingewiesen, daß sich die noch zu beschreibenden erfindungsgemäßen Maßnahmen nicht nur bei Oberfräsen, sondern auch bei anderen Handwerkzeugmaschinen, beispielsweise Bohrmaschinen usw., verwirklichen lassen.

Die Maschine 1 weist eine von außen her für den Benutzer zugängliche Spannmutter 7 auf, die zum Verbinden des Werkzeugschaftes 5 mit dem werkzeugseitigen Ende einer vom Maschinenmotor 6 getriebenen Ausgangswelle 8 dient. Diese Werkzeugbefestigung ist ebenfalls üblicher Bauart. Dabei wird die Spannmutter 7 auf ein mit der Ausgangswelle 8 drehfest verbundenes, beispielsweise am Wellenende oder an einem Zwischenteil ausgebildetes Gewinde geschraubt. Die Spannmutter 7 ist regelmäßig eine Überwurfmutter, die eine Spannzange umschließt, in die der Werkzeugschaft 5 gesteckt wird. Zieht man die Spannmutter 7 fest, nimmt sie ihre Spannstellung ein, in der sie über die Spannzange gegen den Werkzeugschaft 5 wirkt und diesen festspannt. Bei angetriebener Ausgangswelle 8 bildet dann diese zusammen mit dem Werkzeug und der Spannmutter 7 eine rotierende Einheit. Zum Entnehmen des Werkzeugs muß die Spannmutter 7 in Löserichtung gedreht werden, so daß sie in eine Lösestellung überführt wird, in der der Werkzeugschaft 5 freigegeben wird.

Zum beim Einsetzen, Entnehmen oder Auswechseln des Werkzeugs erforderlichen Festspannen bzw. Lösen der Spannmutter 7 müssen also die Spannmutter 7 und die Ausgangswelle 8 mit dem Gewinde relativ zueinander verdreht werden. In diesem Zusammenhang ist vorgesehen, daß bei abgeschaltetem Maschinenmotor 6 die Spannmutter 7 festgehalten und die Ausgangswelle 8 gedreht wird, was ein Verschrauben der Spannmutter 7 auf dem Gewinde der Ausgangswelle 8 zur Folge hat.

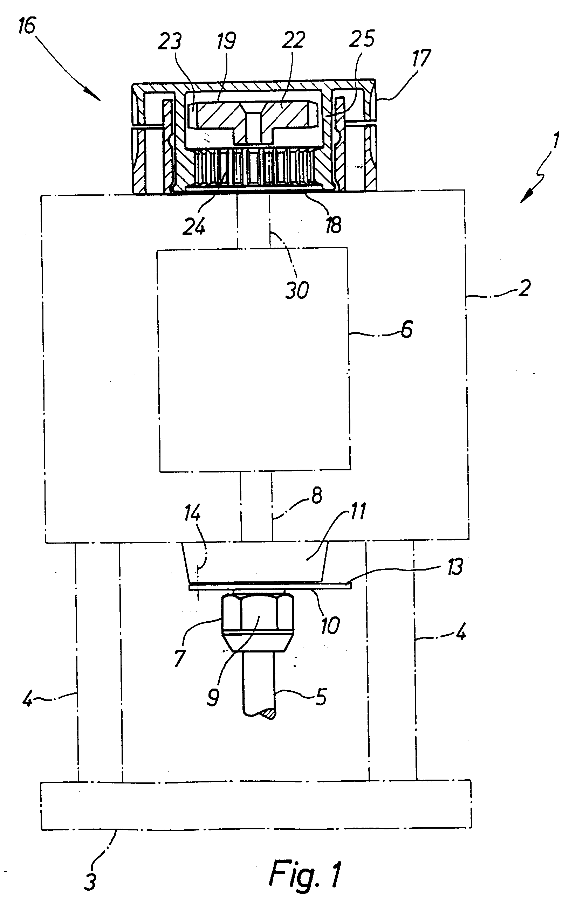

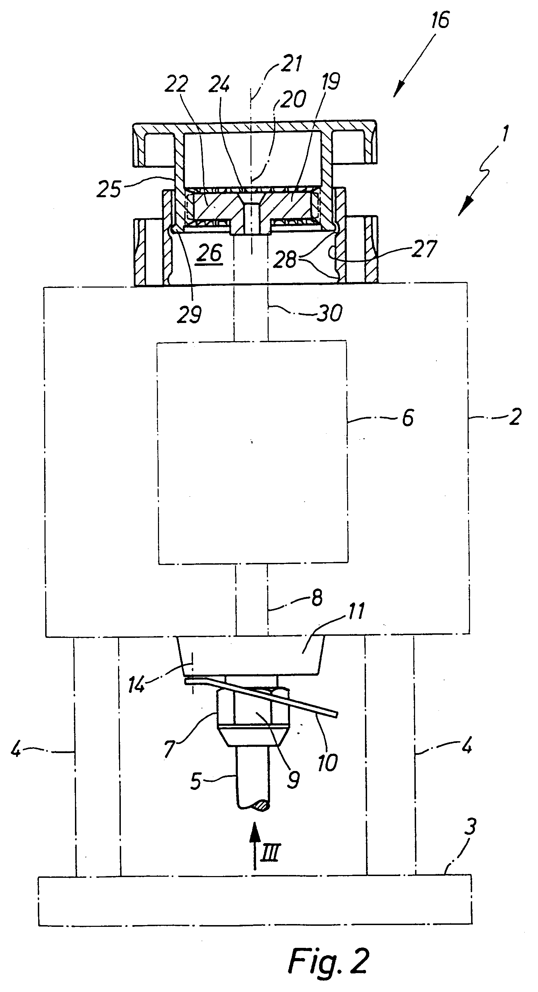

Die Spannmutter 7 weist eine Angriffseinrichtung 9 zum drehfesten Ansetzen eines Spannwerkzeugs 10 auf. Mit Hilfe des an der Angriffseinrichtung 9 angreifenden Spannwerkzeugs 10 kann also die Spannschraube 7 festgehalten werden, so daß sie durch ein Verdrehen der Ausgangswelle 8 in ihre Spannstellung oder in ihre Lösestellung gelangt. Das Spannwerkzeug 10 ist im Bereich der Spannmutter 7 von außen her zugänglich an der Maschine bzw. deren Maschinengehäuse 2 befestigt, so daß es sozusagen in die Maschine integriert ist und stets zur Verfügung steht. Dabei ist das Spannwerkzeug 10 so an der Maschine gelagert, daß es zwischen einer von der Spannmutter 7 entfernten Freigabestellung (Fig. 1) und einer an die Spannmutter 7 angesetzten und diese unverdrehbar haltenden Festhaltestellung (Fig. 2) bewegbar ist. Wie aus der Zeichnung ersichtlich ist, kann die Befestigung des Spannwerkzeugs 10 beispielsweise an einem Gehäusevorsprung 11 erfolgen.

Die Spannmutter 7 ist dem Maschinengehäuse 2 vorgelagert. Bei einer Oberfräse befindet sie sich an der dem Maschinentisch 3 zugewandten Unterseite des Gehäuses 2. Das Spannwerkzeug 10 ist zur dem Maschinengehäuse 2 zugewandten Seite der Spannmutter 7 am Maschinengehäuse 2 befestigt, so daß es sich zwischen dem Maschinengehäuse 2, beim Ausführungsbeispiel zwischen dem Gehäusevorsprung 11 und der Spannmutter 7 befindet. Dabei kann es aus seiner dem Maschinengehäuse 2 zugewandten Freigabestellung (Fig. 1) in Richtung vom Maschinengehäuse 2 weg in die Festhaltestellung gemäß Fig. 2 bewegt werden. In dieser Festhaltestellung greift das Spannwerkzeug 10 an der Angriffseinrichtung 9 der Spannmutter 7 an. Dabei kann die Angriffseinrichtung 9 dadurch gebildet werden, daß die Spannmutter 7 eine von einer Kreisform abweichende Außenkontur aufweist. Beim Ausführungsbeispiel ist die Spannmutter 7 an ihrem Außenumfang nach Art eines Sechskantes ausgebildet. Es versteht sich, daß der Außenumfang prinzipiell auch anders gestaltet sein könnte, beispielsweise indem er lediglich zwei einander entgegengesetzte Flachseiten enthält. Das Spannwerkzeug 10 weist eine der Außenkontur der Spannmutter 7 entsprechende Festhalteausnehmung 12 auf, in die die Spannmutter 7 beim Überführen des Spannwerkzeugs 10 in seine Festhaltestellung gelangt, so daß das Spannwerkzeug 10 mit seiner Festhalteausnehmung 12 die Spannmutter 7 umgreift. Die Festhalteausnehmung 12 ist also sozusagen einem zur Spannmutter 7 passenden Schraubenschlüssel entsprechend konturiert.

Da das Spannwerkzeug 10 unverdrehbar am Maschinengehäuse 2 befestigt und somit nur in Richtung zur Spannmutter 7 hin bzw. von dieser weg bewegbar ist, wird die Spannmutter 7 bei in der Festhaltestellung befindlichem Spannwerkzeug 10 sicher festgehalten, so daß sie sich beim Verdrehen der Ausgangswelle 8 nicht mitdrehen kann.

Die Festhalteausnehmung 12 ist zweckmäßigerweise rundum geschlossen.

Das Spannwerkzeug 10 weist ferner eine seitlich vorstehende Handgriffpartie 13 auf, so daß es vom Benutzer ergriffen und betätigt werden kann.

Eine weitere zweckmäßige Maßnahme besteht darin, daß das Spannwerkzeug 10 entgegen einer Federkraft aus seiner Freigabestellung in die Festhaltestellung bewegbar ist. Auf diese Weise befindet sich das Spannwerkzeug 10 auf Grund der Federkraft normalerweise, wenn es nicht gebraucht wird, in seiner Freigabestellung, so daß das Werkzeug ungehindert rotieren kann.

Die Bewegung des Spannwerkzeugs 10 könnte eine Linearbewegung sein, bei der das Spannwerkzeug 10 einer entsprechenden Führung an der Maschine entlang bewegt wird. Einfacher ist es demgegenüber, daß das Spannwerkzeug 10, wie beim Ausführungsbeispiel, von einem einseitig an einer Befestigungsstelle 14 an der Maschine bzw. dem Maschinengehäuse 2 (Gehäusevorsprung 11) befestigten, durch elastisches Verbiegen in seine Festhaltestellung schwenkbaren Flachmaterialstück 15 gebildet wird, das zweckmäßigerweise aus Metall besteht. In diesem Falle handelt es sich also um ein eigenelastisches Spannwerkzeug, das nach Art einer Blattfeder einerseits festgelegt ist und andererseits ausgelenkt werden kann. Die Handgriffpartie 13 befindet sich an einer der Befestigungsstelle 14 entgegengesetzten Stelle.

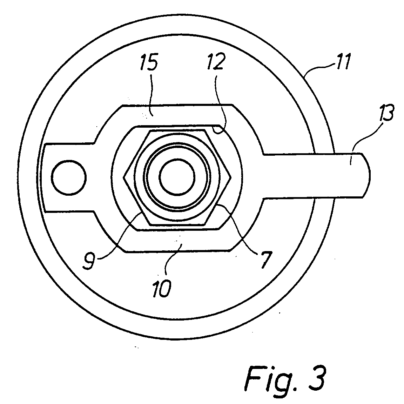

Das das Spannwerkzeug 10 bildende Flachmaterialstück 15 und das Eingreifen der Spannmutter 7 in die Festhalteausnehmung 12 ist am besten aus Fig. 3 ersichtlich. Zu dieser Fig. 3 wird noch darauf hingewiesen, daß das Werkzeug entfernt ist.

Um die Ausgangswelle 8 bzw. das drehfest mit ihr verbundene Gewinde bei abgeschaltetem Maschinenmotor 6 verdrehen zu können, ist an der Maschine 1 eine von außen her bedienbare Eingriffseinrichtung 16 mit einer vom Benutzer ergreifbaren Handhabe 17 und einem Eingriffsteil 18 angeordnet, wobei die Eingriffseinrichtung 16 zwischen einer wirksamen Stellung (Fig. 2), in der das Eingriffsteil 18 mit einem drehfest mit der Ausgangswelle 8 verbundenen Gegenstück 19 drehfest in Eingriff steht, und einer unwirksamen Stellung (Fig. 1), in der das Eingriffsteil 18 das Gegenstück 19 freigibt, verstellbar ist. Dabei ist die Eingriffseinrichtung 16 so an der Maschine 1 bzw. am Maschinengehäuse 2 gelagert, daß sie mindestens in ihrer wirksamen Stellung verdreht werden kann. Bei diesem Verdrehen wird das drehfest mit der Ausgangswelle 8 verbundene Gegenstück 19 und somit die Ausgangswelle 8 mitgenommen, so daß bei in der Festhaltestellung befindlichem Spannwerkzeug 10 die Spannmutter 7 gelöst wird.

Wie in diesem Zusammenhang ferner aus der Zeichnung hervorgeht, ist die Eingriffseinrichtung 16 zu ihrem Verstellen zwischen der wirksamen und unwirksamen Stellung in Richtung der Rotationsachslinie 20 des Gegenstücks 19 bewegbar. Dabei fallen die Drehachslinie 21 der Eingriffseinrichtung 16, um die die Eingriffseinrichtung 16 zum Verdrehen der Ausgangswelle 8 verdreht wird, und die Rotationsachslinie 20 des Gegenstücks 19 zusammen.

Das Eingriffsteil 18 gelangt beim Überführen der Eingriffseinrichtung 16 in ihre wirksame Stellung (Fig. 2) in Steckeingriff mit dem Gegenstück 19. Hierzu kann das Gegenstück 19 von einem Zahnrad 22 gebildet werden, mit dessen Zähnen 23 das Eingriffsteil 18 in Eingriff gelangt. Eine große Kraftübertragungsfläche in Drehrichtung zwischen dem Eingriffsteil 18 und dem Zahnrad 22 erhält man dann, wenn das Eingriffsteil 18 von einem in der wirksamen Stellung mit dem Zahnrad 22 zusammengesteckten Zahnkranz 24 der Eingriffseinrichtung 16 gebildet wird. Beim Ausführungsbeispiel handelt es sich bei dem Zahnrad 22 um eine Außenverzahnung. Dementsprechend ist der Zahnkranz 24 ein innenverzahnter Zahnkranz.

Zur Führung der Eingriffseinrichtung 16 kann diese eine kreiszylindrische Führungswand 25 aufweisen, die in eine kreiszylindrische Führungsausnehmung 26 am Maschinengehäuse 2 zwischen ihren beiden Stellungen verstellbar eingesteckt ist. Beim Ausführungsbeispiel wird die Führungsausnehmung 26 von einem Gehäuseansatz gebildet. Die Umfangsfläche 27 der Führungsausnehmung 26 bildet also eine Führung für die Eingriffseinrichtung 16 bei deren Verstellbewegung. Außerdem kann die Eingriffseinrichtung 16 mit ihrer kreiszylindrischen Führungswand 25 in der Führungsausnehmung 26 verdreht werden.

Der Zahnkranz 24 ist an der Führungswand 25 angeordnet, wobei er einstückig angeformt sein kann.

Die Führungswand 25 ist in den beiden Stellungen der Eingriffseinrichtung 16 an der Umfangsfläche 27 der Führungsausnehmung 26 lösbar verrastet. Hierzu sind beim Ausführungsbeispiel an der Umfangsfläche 27 der Führungsausnehmung 26 im dem Verstellweg der Eingriffseinrichtung 16 entsprechenden Abstand zwei Rillen 28 angeordnet, denen eine Ringwulst 29 an der Führungswand 25 zugeordnet ist. In jeder der beiden Stellungen greift die Ringwulst 29 in eine der beiden Rillen 28 ein. Auf diese Weise wird gleichzeitig eine Führung der Eingriffseinrichtung 16 bei ihrem Verdrehen erzielt.

Wie aus einem Vergleich der Fig. 1 und 2 hervorgeht, nimmt die Eingriffseinrichtung 16 in ihrer unwirksamen Stellung (Fig. 1) eine dem Maschinengehäuse 2 nähere Position und in ihrer wirksamen Stellung (Fig. 2) eine demgegenüber vom Maschinengehäuse 2 entferntere Position ein, das heißt, die Eingriffseinrichtung 16 muß zu ihrem Überführen in die wirksame Stellung mittels der Handhabe 17 sozusagen vom Maschinengehäuse 2 weggezogen werden.

Selbstverständlich könnte die Anordnung diesbezüglich auch umgekehrt getroffen sein, daß man die Eingriffseinrichtung in ihre wirksame Stellung nach innen drücken muß. Die dargestellte Ausführungsform hat jedoch demgegenüber den Vorteil, daß man beim Halten der Maschine bei der Werkstückbearbeitung, wenn man möglicherweise auch gegen die Eingriffseinrichtung 16 drückt, keine drehfeste Verbindung zwischen der Eingriffseinrichtung 16 und dem Gegenstück 19 erhält.

Das Gegenstück 19 befindet sich koaxial zur Führungswand 25 in der Führungsausnehmung 26.

Eine weitere zweckmäßige Maßnahme besteht darin, daß das Gegenstück 19 an einer der Ausgangswelle 8 entgegengesetzten Verlängerung 30 der Ankerwelle des elektrischen Maschinenmotors 6 sitzt. Das Gegenstück und die zugeordnete Eingriffseinrichtung könnten sich prinzipiell jedoch auch an einer anderen Stelle des Antriebsstrangs der Maschine befinden.

## Patentansprüche

1. Handwerkzeugmaschine mit einer von außen her zugänglichen Spannmutter (7) zum Verbinden des Schaftes eines Werkstück-Bearbeitungswerkzeugs mit dem werkzeugseitigen Ende einer vom Maschinenmotor (5) getriebenen Ausgangswelle (8), wobei die Spannmutter (7) auf einem drehfest mit der Ausgangswelle (8) verbundenen Gewinde zwischen einer den Werkzeugschaft festspannenden Spannstellung und einer den Werkzeugschaft loslassenden Lösestellung hin und her schraubbar ist, wobei die Spannmutter (7) eine Angriffseinrichtung (9) zum drehfesten Ansetzen eines Spannwerkzeugs (10) aufweist und wobei an der Maschine eine von außen her bedienbare Eingriffseinrichtung (16) mit einer Handhabe (17) und einem Eingriffsteil (18) angeordnet ist, die zwischen einer wirksamen Stellung, in der das Eingriffsteil (18) mit einem drehfest mit der Ausgangswelle (8) verbundenen Gegenstück (19) drehfest in Eingriff steht, und einer unwirksamen Stellung, in der das Eingriffsteil (18) das Gegenstück (19) freigibt, verstellbar ist, dadurch gekennzeichnet, daß das Spannwerkzeug (10) im Bereich der Spannmutter (7) von außen her zugänglich an der Maschine (1) befestigt und derart gelagert oder ausgebildet ist, daß es zwischen einer von der Spannmutter (7) entfernten Freigabestellung und einer an die Spannmutter (7) angesetzten und diese unverdrehbar haltenden Festhaltestellung bewegbar ist, und daß die Eingriffseinrichtung (16) mindestens in ihrer wirksamen Stellung verdrehbar an der Maschine (1) gelagert ist, so daß bei in der Festhaltestellung befindlichem Spannwerkzeug (10) die Ausgangswelle (8) und somit das Gewinde, auf das die Spannmutter (7) aufgeschraubt ist, verdreht werden kann.

2. Handwerkzeugmaschine nach Anspruch 1, dadurch gekennzeichnet, daß das Spannwerkzeug (10) an der dem Maschinengehäuse (2) zugewandten Seite der dem Maschinengehäuse (2) vorgelagerten Spannmutter (7) am Maschinengehäuse (2) befestigt ist und aus seiner dem Maschinengehäuse (2) zugewandten Freigabestellung in Richtung von diesem weg in die Festhaltestellung bewegbar ist, wobei die Spannmutter (7) eine von einer Kreisform abweichende Außenkontur und das Spannwerkzeug (10) eine entsprechende, in der Festhaltestellung die Spannmutter (7) umgreifende Festhalteausnehmung (12) aufweist.

3. Handwerkzeugmaschine nach Anspruch 2, dadurch gekennzeichnet, daß die Festhalteausnehmung (12) rundum geschlossen ist.

4. Handwerkzeugmaschine nach Anspruch 2 oder 3, dadurch gekennzeichnet, daß das Spannwerkzeug (10) eine seitlich vorstehende Handgriffpartie (13) aufweist.

5. Handwerkzeugmaschine nach einem der Ansprüche 2 bis 4, dadurch gekennzeichnet, daß das Spannwerkzeug (10) entgegen einer Federkraft aus seiner Freigabestellung in die Festhaltestellung bewegbar ist.

6. Handwerkzeugmaschine nach Anspruch 5, dadurch gekennzeichnet, daß das Spannwerkzeug (10) von einem einseitig an der Maschine (1) befestigten, durch elastisches Verbiegen in seine Festhaltestellung schwenkbaren Flachmaterialstück (15), insbesondere aus Metall, gebildet wird.

7. Handwerkzeugmaschine nach einem der Ansprüche 1 bis 6, dadurch gekennzeichnet, daß die Eingriffseinrichtung (16) zu ihrem Verstellen in Richtung der Rotationsachslinie (20) des Gegenstücks (19) bewegbar ist.

8. Handwerkzeugmaschine nach Anspruch 7, dadurch gekennzeichnet, daß die Drehachslinie (21) der Eingriffseinrichtung (16) und die Rotationsachslinie (20) des Gegenstücks (19) zusammenfallen.

9. Handwerkzeugmaschine nach einem der Ansprüche 1 bis 8, dadurch gekennzeichnet, daß das Gegenstück (19) von einem Zahnrad (22) gebildet wird.

10. Handwerkzeugmaschine nach Anspruch 9, dadurch gekennzeichnet, daß das Eingriffsteil (18) von einem in der wirksamen Stellung mit dem Zahnrad (22) zusammengesteckten Zahnkranz (24) der Eingriffseinrichtung (16) gebildet wird.

11. Handwerkzeugmaschine nach einem der Ansprüche 1 bis 10, dadurch gekennzeichnet, daß die Eingriffseinrichtung (16) eine kreiszylindrische Führungswand (25) aufweist, die in eine kreiszylindrische Führungsausnehmung (26) am Maschinengehäuse (2) zwischen ihren beiden Stellungen verstellbar eingesteckt ist.

12. Handwerkzeugmaschine nach Anspruch 11, dadurch gekennzeichnet, daß das Gegenstück (19) koaxial zur Führungswand (25) in der Führungsausnehmung (26) angeordnet ist.

13. Handwerkzeugmaschine nach Anspruch 12, dadurch gekennzeichnet, daß der Zahnkranz (24) an der Führungswand (25) angeordnet ist.

14. Handwerkzeugmaschine nach einem der Ansprüche 11 bis 13, dadurch gekennzeichnet, daß die Führungswand (25) in den beiden Stellungen der Eingriffseinrichtung (16) an der Umfangsfläche (27) der Führungsausnehmung (26) lösbar verrastet ist.

15. Handwerkzeugmaschine nach einem der Ansprüche 7 bis 14, dadurch gekennzeichnet, daß die Eingriffseinrichtung (16) in ihrer unwirksamen Stellung eine dem Maschinengehäuse (2) nähere Position und in ihrer wirksamen Stellung eine demgegenüber vom Maschinengehäuse (2) entferntere Position einnimmt.

16. Handwerkzeugmaschine nach einem der Ansprüche 1 bis 15, dadurch gekennzeichnet, daß das Gegenstück (19) an einer der Ausgangswelle (8) entgegengesetzten Verlängerung der Ankerwelle des elektrischen Maschinenmotors (6) sitzt.

## Claims

1. Hand-operated machine tool with an externally-accessible clamp nut (7) for connecting the shank of a work machining tool with the tool-side end of an output shaft (8) driven by a machine motor (6), wherein the clamp nut (7) can be screwed to and fro on a thread which is non-rotatably connected to the output shaft (8) between a clamping position in which the tool shank is clamped and a release position in which the tool shank is released, wherein the clamp nut (7) has an engagement device (9) for the non-rotatable attachment of a clamping tool (10) and wherein the machine is provided with an externally-operable engaging device (16) with a handle (17) and an engaging section (18) and which is adjustable between an operative position in which the engaging section (18) is in non-rotatable engagement with a mating element (19) connected non-rotatably to the output shaft (8), and an inoperative position in which the engaging section (18) releases the mating element (19), characterized in that the clamping tool (10) is fixed to the machine (1) in the area of the clamp nut (7) so as to be accessible from the outside, and is so mounted or designed that it may be moved between a release position at a distance from the clamp nut (7) and a clamping position attached to and holding the clamp nut (7) so that the latter is unable to rotate, and that the engaging device (16) is mounted rotatably on the machine (1) at least in its operative position, so that when the clamping tool (10) is in the clamping position, the output shaft (8) and thus the thread on to which the clamp nut (7) is screwed can be rotated.

2. Hand-operated machine tool according to claim 1, characterized in that the clamping tool (10) is fixed to the machine casing (2) on that side of the clamp nut (7) mounted in front of and facing the machine casing (2), and may be moved away from its release position facing the machine casing (2) towards the clamping position, wherein the clamp nut (7) has an external contour deviating from the circular form, and the clamping tool (10) has a corresponding locating recess (12) embracing the clamp nut (7) in the clamping position.

3. Hand-operated machine tool according to claim 2, characterized in that the locating recess (12) is enclosed all-round.

4. Hand-operated machine tool according to claim 2 or 3, characterized in that the clamping tool (10) has a handle section (13) extending to the side.

5. Hand-operated machine tool according to any of claims 2 to 4, characterized in that the clamping tool (10) may be moved against a spring force from its release position into the clamping position.

6. Hand-operated machine tool according to claim 5, characterized in that the clamping tool (10) is formed by a flat material element (15), in particular of metal, attached at one end to the machine (1), and which can be swivelled into its clamping position by flexible bending.

7. Hand-operated machine tool according to any of claims 1 to 6, characterized in that the engaging device (16) is movable for its adjustment in the direction of the rotational axis (20) of the mating element (19).

8. Hand-operated machine tool according to claim 7, characterized in that axis of rotation (21) of the engaging device (16) and the rotational axis (20) of the mating element (19) coincide.

9. Hand-operated machine tool according to any of claims 1 to 8, characterized in that the mating element (19) is formed by a gear (22).

10. Hand-operated machine tool according to claim 9, characterized in that the engaging section (18) is formed by a gear rim (24) of the engaging device (16) engaging with the gear (22) in the operative position.

11. Hand-operated machine tool according to any of claims 1 to 10, characterized in that the engaging device (16) has a circular-cylindrical guide wall (25) which is inserted into a circular-cylindrical guide recess (26) in the machine casing (2) so as to be adjustable between its two positions.

12. Hand-operated machine tool according to claim 11, characterized in that the mating element (19) is located in the guide recess (26) coaxially to the guide wall (25).

13. Hand-operated machine tool according to claim 12, characterized in that the gear rim (24) is located on the guide wall (25).

14. Hand-operated machine tool according to any of claims 11 to 13, characterized in that the guide wall (25) is releasably located on the peripheral surface (27) of the guide recess (26) in the two positions of the engaging device (16).

15. Hand-operated machine tool according to any of claims 7 to 14, characterized in that, in its inoperative position, the engaging device (16) assumes a position closer to the machine casing (2), while in its operative position it is further removed from the machine casing (2).

16. Hand-operated machine tool according to any of claims 1 to 15, characterized in that the mating element (19) rests on an extension of the armature shaft of the electrical machine motor (6) opposite the output shaft (8).

## Revendications

1. Machine-outil portable comportant un écrou de serrage (7) accessible de l'extérieur destiné à relier la tige d'un outil d'usinage de pièce avec l'extrémité côté outil d'un arbre de sortie (8) entraîné par le moteur (6) de la machine, l'écrou de serrage (7) pouvant être vissé dans un sens et dans l'autre sur un filetage relié solidairement en rotation à l'arbre de sortie (8) entre une position de serrage serrant fermement la tige de l'outil et une position de desserrage libérant la tige de l'outil, l'écrou de serrage (7) présentant un dispositif de prise (9) pour la mise en place solidaire en rotation d'un outil de serrage (10) et sur la machine étant monté un dispositif d'engagement (16) commandable de l'extérieur, avec une poignée (17) et un élément d'engagement (18), lequel dispositif d'engagement est réglable entre une position active, dans laquelle l'élément d'engagement (18) est en engagement solidaire en rotation avec une contre-pièce (19), reliée solidairement en rotation à l'arbre de sortie (8) et une position inactive dans laquelle l'élément d'engagement (18) libère la contre-pièce (19), caractérisée en ce que l'outil de serrage (10) est fixé à la machine (1), dans la région de l'écrou de serrage (7), de manière qu'il soit accessible de l'extérieur et est monté ou conformé de manière à être déplaçable entre une position de libération éloignée de l'écrou de serrage (7) et une position d'immobilisation placée sur l'écrou de serrage (7) et maintenant celui-ci de manière qu'il ne puisse tourner, et en ce que le dispositif d'engagement (16) est monté tournant sur la machine (1), au moins dans sa position active, de sorte que lorsque l'outil de serrage (10) se trouve dans la position d'immobilisation, l'arbre de sortie (8) et donc le filetage, sur lequel est vissé l'écrou de serrage (7), peuvent être tournés.

2. Machine-outil selon la revendication 1, caractérisée en ce que l'outil de serrage (10) est fixé au boîtier (2) de la machine, sur le côté, tourné vers le boîtier (2) de la machine, de l'écrou de serrage (7) placé devant le boîtier (2) de la machine, et est déplaçable à partir de sa position de libération tournée vers le boîtier (2) de la machine en s'éloignant de celle-ci, vers la position d'immobilisation, l'écrou de serrage (7) présentant un contour extérieur différent d'une forme circulaire et l'outil de serrage (10) présentant un évidement d'immobilisation (12) correspondant, entourant l'écrou de serrage (7) dans la position d'immobilisation.

3. Machine-outil portable selon la revendication 2, caractérisée en ce que l'évidement d'immobilisation (12) est fermé sur tout son pourtour.

4. Machine-outil portable selon la revendication 2 ou 3, caractérisée en ce que l'outil de serrage (10) présente une partie formant poignée (13) dépassant latéralement.

5. Machine-outil portable selon l'une des revendications 2 à 4, caractérisée en ce que l'outil de serrage (10) est déplaçable, à l'encontre de la force d'un ressort, de sa position de libération vers sa position d'immobilisation.

6. Machine-outil portable selon la revendication 5, caractérisée en ce que l'outil de serrage (10) est formé par une pièce en matériau plat (15), en particulier en métal, fixée d'un côté à la machine (1), pouvant pivoter vers sa position d'immobilisation par pliage élastique.

7. Machine-outil portable selon l'une des revendications 1 à 6, caractérisée en ce que le dispositif d'engagement (16) est déplaçable, pour son réglage, dans la direction de la ligne de l'axe de rotation (20) de la contre-pièce (19).

8. Machine-outil portable selon la revendication 7, caractérisée en ce que la ligne d'axe de rotation (21) du dispositif d'engagement (16) et la ligne d'axe de rotation (20) de la contre-pièce (19) coïncident.

9. Machine-outil portable selon l'une des revendications 1 à 8, caractérisée en ce que la contre-pièce (19) est formée par une roue dentée (22).

10. Machine-outil portable selon la revendication 9, caractérisée en ce que l'élément d'engagement (18) est constitué par une couronne dentée (24) du dispositif d'engagement (16) assemblée à la roue dentée (22) par emboîtement, dans la position active.

11. Machine-outil portable selon l'une des revendications 1 à 10, caractérisée en ce que le dispositif d'engagement (16) présente une paroi de guidage (25) cylindrique à base circulaire, qui est emboîtée, de manière à pouvoir être réglée entre ses deux positions dans un évidement de guidage (26) cylindrique à base circulaire du boîtier (2) de la machine.

12. Machine-outil portable selon la revendication 11, caractérisée en ce que la contre-pièce (19) est disposée coaxialement à la paroi de guidage (25) dans l'évidement de guidage (26).

13. Machine-outil portable selon la revendication 12, caractérisée en ce que la couronne dentée (24) est disposée sur la paroi de guidage (25).

14. Machine-outil portable selon l'une des revendications 11 à 13, caractérisée en ce que la paroi de guidage (25) est accrochée de manière non permanente, dans les deux positions du dispositif d'engagement (16), à la surface périphérique (27) de l'évidement de guidage (26).

15. Machine-outil portable selon l'une des revendications 7 à 14, caractérisée en ce que dans sa position inactive, le dispositif d'engagement (16) prend une position plus proche du boîtier (2) de la machine, et dans sa position active, une position plus éloignée du boîtier (2) de la machine.

16. Machine-outil portable selon l'une des revendications 1 à 15, caractérisée en ce que la contre-pièce (19) est placée sur un prolongement, opposé à l'arbre de sortie (8), de l'arbre d'induit du moteur électrique (6) de la machine.
